# EUROPEAN PATENT APPLICATION

(11) **EP 4 209 545 A1**
(43) Date of publication of application: **12.07.2023**
(21) Application number: 23154238.2
(22) Date of filing: 17.09.2019
(51) Int. Cl.: C08K 9/04, C08K 3/04, B29B 7/10, B29C 70/58, C01B 32/198, C08J 5/00

(54) **INDUSTRIAL SCALE PROCESSES FORM A COVALENT BONDED MONOMER AND GRAPHENE OXIDE STRUCTURES**

(30) Priority: 18.09.2018 US 201862732723 P
(62) Divisional of application: 19862892.7
(71) Applicant: Asbury Graphite of North Carolina, Inc., Lumberton, NC 28358 (US)
(72) Inventor: RESTREPO, David, Orlando (US); MCINNIS, Matthew, Orlando (US); CHRISTIANSEN, Sean, Orlando (US)
(74) Representative: SONN Patentanwälte OG

(57) **Abstract**

The present invention includes method of making a chemisorbed graphene oxide polymer composite comprising the steps of: placing a monomer and graphene oxide into a ball mill; milling the monomer with a carbon additive to produce a physisorbed monomer graphene oxide material; placing the physisorbed monomer graphene oxide material into a polymerization chemical reactor, wherein the physisorbed monomer graphene oxide is converted to chemisorbed monomer graphene oxide; and reacting the monomer carbon additive with other monomers or prepolymers to polymerize the materials to form a chemisorbed carbon polymer composite.

## Description

### CROSS-REFERENCE TO RELATED APPLICATIONS

This PCT International Patent Application claims priority to U.S. Provisional Patent Application Serial No. 62/732,723 filed September 18, 2018, the contents of which is incorporated by reference herein in its entirety.

### STATEMENT OF FEDERALLY FUNDED RESEARCH

None.

### TECHNICAL FIELD OF THE INVENTION

The present invention relates in general to the field of industrial scale processes form a covalent bonded monomer and graphene oxide structures.

### BACKGROUND OF THE INVENTION

Without limiting the scope of the invention, its background is described in connection with composite materials.

Graphite is commonly used to enhance mechanical, electrical, and thermal conductivity of a composite material. Graphite has been used as a component in a wide number of composite materials including resins, epoxies, and polymers. Composite materials can be prepared by using different reinforcing fillers such as natural graphite, synthetic graphite, carbon black, or carbon fibers with phenolic resin as a polymer matrix precursor in its liquid and powder form. However there is a lack of work in the physical mixing/blending of monomers with sufficient energy to not only exfoliate and disperse the graphene oxide (GO) in the monomer but also cause a chemical reaction with functional groups on the graphene oxide.

Solid-Solid mixing is a common and proven way to blend powders in solids handling industries. For decades, solid-solid mixing has been used in powder blending to homogenize bulk materials and has been designed to handle materials with various bulk solids properties. On the basis of the practical experience gained with these different machines, engineering knowledge has been developed to construct reliable equipment and to predict scale-up and mixing behavior. Today the same mixing technologies are used for many more applications to: improve product quality, coat particles, fuse materials, wet, disperse in liquid, deagglomerate, and alter the material properties. Now solid-solid mixing is being used to accomplish the classic chemical reaction/processes without the need of a solvent. This general technical approach is referred to as mechanochemistry.

The activation of chemical reactions, in classic terms use thermochemistry, electrochemistry, and photochemistry as energy sources. Traditional chemical processes often also utilize a catalyst to facilitate covalent reactions. These traditional sources of energy are reflected in the standard physical chemistry textbooks. The alternate pathway of chemical activation is mechanochemistry. Mechanochemistry uses collisional energy to activate the desired chemical reaction and a catalyst to facilitate covalent reactions. Although some covalent reaction may occur without a catalyst the conversion efficiency may be very low. But in fact, mechanochemical generated energy can replace thermal, electrical, photon or chemical energy imparted directly in to the material at the media-media interaction/collision sites. One example of the mechanochemical process was demonstrated by Dr. Swager et al; Dr. Swager used mechanochemical energy and a catalyst to polymerize poly(phenylene vinylene) (PPV) from two white powders - the monomer (1,4-bis(chloromethyl)-2-((2-ethylhexyl)oxy)-5-methoxybenzene), and a strong base (potassium tert-butoxide) - to form a red conductive polymer using a ball mill (ACS Macro Lett. 2014, DOI: 10.1021/mz500098r). They reported the process is fast, requires no solvent, and yields more consistent chain lengths than wet-chemistry synthesis. The only draw back to the process was that the conversion yield was 60% with an average particle size less than 5 nm. In addition to the advancements made in solid-solid mixing there have been significant improvements in the physical characteristics of GO loaded material through covalent reaction of the functional groups of the GO with monomers prior to forming a polymer. Covalent reactions can readily occur between the COOH and OH functionalization of GO and amine-based monomers. The improvement in physical properties by covalent reaction can readily be seen the in results published at the (PDA Conference - Becker Presentation) Polyurea Development Association Conference October 4 - 6, 2017. This publication reported GO/Polyurea composite at 2% loadings achieving: >350% increase in surface toughness; >50% increase in elongation to break; >290% improvement in Tensile. A simultaneous increase in both Tensile and Elongation to break is indicative of a covalent/Chemisorbed reaction. Physisorbed/non covalent reactions with good dispersions result in a decrease in the elongation to break with increased tensile strength.

Despite these advances, a need remains for consistent, industrial scales processes to form a covalent bonded monomer and GO Structure.

### SUMMARY OF THE INVENTION

The present invention includes method of making a chemisorbed graphene oxide polymer composite comprising the steps of: placing a monomer and graphene oxide into a ball mill; milling the monomer with a carbon additive to produce a physisorbed monomer graphene oxide material; placing the physisorbed monomer graphene oxide material into a polymerization chemical reactor, wherein the physisorbed monomer graphene oxide is converted to chemisorbed monomer graphene oxide; and reacting the monomer carbon additive with other monomers or prepolymers to polymerize the materials to form a chemisorbed carbon polymer composite.

In one embodiment, the present invention includes a method of making a chemisorbed graphene oxide polymer composite comprising the steps of: placing a monomer and graphene oxide into a ball mill; milling the monomer with a carbon additive to produce a physisorbed monomer graphene oxide material; placing the physisorbed monomer graphene oxide material into a polymerization chemical reactor, wherein the physisorbed monomer graphene oxide is converted to chemisorbed monomer graphene oxide by a heat treatment; and reacting the monomer carbon additive with other monomers or prepolymers to polymerize the materials to form a chemisorbed carbon polymer composite. In one aspect, the chemisorbed carbon polymer composite has both an increase in physical properties and has a corresponding increase in elongation to break. In another aspect, the carbon additive is comprised of an oxide of graphite, graphene, carbon, carbon nanotubes, carbon black or carbon nanowires. In another aspect, the monomer of is a liquid or a solid particle. In another aspect, the monomer is a particle with a particle size greater than 1µm and less than 500 µm. In another aspect, the monomer is a liquid of a viscosity greater than 1 centipoise and less than 10,000 centipoise. In another aspect, the carbon oxide is comprised of at least one of: a hydroxide, a peroxide, an epoxide or a carboxylic. In another aspect, the carbon oxide is graphene oxide. In another aspect, the graphene oxide has an oxidation level between 1% and 25%. In another aspect, the graphene oxide is a graphene oxide flake. In another aspect, the graphene oxide flake has an area to thickness ration less than 100,000 Å. In another aspect, the heat treatment further comprises a catalyst. In another aspect, the catalyst selected from a volatile, fixed or permanent base chosen from one or more of ammonia, amines, potassium hydroxide, lithium hydroxide, sodium hydroxide, calcium hydroxide, sodium carbonate, sodium silicate, and transition metal amino compounds. In another aspect, the heat treatment comprises a temperature of 35, 40, 45, 45, 55, 60, 65, 70 or 75°C.

In another embodiment, the present invention includes a method of making a chemisorbed graphene oxide polymer composite comprising the steps of: placing a monomer and graphene oxide flake into a ball mill; milling the monomer with a carbon additive to produce a physisorbed monomer graphene oxide material; placing the physisorbed monomer graphene oxide material into a polymerization chemical reactor, wherein the physisorbed monomer graphene oxide is converted to chemisorbed monomer graphene oxide by a heat treatment; and reacting the monomer carbon additive with other monomers or prepolymers to polymerize the materials to form a chemisorbed carbon polymer composite. In one aspect, the chemisorbed carbon polymer composite has both an increase in physical properties and has a corresponding increase in elongation to break. In another aspect, the carbon additive is comprised of an oxide of graphite, graphene, carbon, carbon nanotubes, carbon black or carbon nanowires. In another aspect, the monomer of is a liquid or a solid particle. In another aspect, the monomer is a particle with a particle size greater than 1µm and less than 500 µm. In another aspect, the monomer is a liquid of a viscosity greater than 1 centipoise and less than 10,000 centipoise. In another aspect, the carbon oxide is comprised of at least one of: a hydroxide, a peroxide, an epoxide or a carboxylic. In another aspect, the graphene oxide flake has an oxidation level between 1% and 25%. In another aspect, the graphene oxide flake has an area to thickness ration less than 100,000 Å. In another aspect, the reactor further comprises a catalyst. In another aspect, the catalyst selected from a volatile, fixed or permanent base chosen from one or more of ammonia, amines, potassium hydroxide, lithium hydroxide, sodium hydroxide, calcium hydroxide, sodium carbonate, sodium silicate, and transition metal amino compounds. In another aspect, the heat treatment comprises a temperature of 35, 40, 45, 45, 55, 60, 65, 70 or 75°C.

In one embodiment, the present invention also includes a chemisorbed graphene oxide polymer composite made by a method comprising: placing a monomer and graphene oxide into a ball mill; milling the monomer with a carbon additive to produce a physisorbed monomer graphene oxide material; placing the physisorbed monomer graphene oxide material into a polymerization chemical reactor, wherein the physisorbed monomer graphene oxide is converted to chemisorbed monomer graphene oxide by a heat treatment and, optionally, a catalyst; and reacting the monomer carbon additive with other monomers or prepolymers to polymerize the materials to form the chemisorbed graphene oxide polymer composite.

In one embodiment, the present invention also includes a method of making a chemisorbed graphene oxide comprising the steps of: placing a monomer and graphene oxide into a ball mill; milling the monomer with a carbon additive to produce a physisorbed monomer graphene oxide material; converting the physisorbed monomer graphene oxide material into a chemisorbed monomer graphene oxide by a heat treatment. In one aspect, the carbon additive comprised an oxide of graphite, graphene, carbon, carbon nanotubes, carbon black or carbon nanowires. In another aspect, the monomer of is a liquid or a solid particle. In another aspect, the monomer is a particle with a particle size greater than 1µm and less than 500 µm. In another aspect, the monomer is a liquid of a viscosity greater than 1 centipoise and less than 10,000 centipoise. In another aspect, the graphene oxide has an oxidation level between 1% and 25%. In another aspect, the graphene oxide is a graphene oxide flake. In another aspect, the graphene oxide flake has an area to thickness ration less than 100,000 Å. In another aspect, the heat treatment further comprises a catalyst. In another aspect, the catalyst selected from a volatile, fixed or permanent base chosen from one or more of ammonia, amines, potassium hydroxide, lithium hydroxide, sodium hydroxide, calcium hydroxide, sodium carbonate, sodium silicate, and transition metal amino compounds. In another aspect, the heat treatment comprises a temperature of 35, 40, 45, 45, 55, 60, 65, 70 or 75°C.

### DETAILED DESCRIPTION OF THE INVENTION

While the making and using of various embodiments of the present invention are discussed in detail below, it should be appreciated that the present invention provides many applicable inventive concepts that can be embodied in a wide variety of specific contexts. The specific embodiments discussed herein are merely illustrative of specific ways to make and use the invention and do not delimit the scope of the invention.

To facilitate the understanding of this invention, a number of terms are defined below. Terms defined herein have meanings as commonly understood by a person of ordinary skill in the areas relevant to the present invention. Terms such as "a", "an" and "the" are not intended to refer to only a singular entity, but include the general class of which a specific example may be used for illustration. The terminology herein is used to describe specific embodiments of the invention, but their usage does not limit the invention, except as outlined in the claims.

Graphene on a micron scale is hundreds of times stronger than steel, harder than diamond, and conducts heat and electricity better than copper. Translating these attributes to industrially relevant opportunities has been a challenge. The present inventors have translated the micron scale to the macroscale by reacting their GO with monomers creating covalent bonds between the GO and the polymer in reactors used for *in situ* polymerization. A covalent/chemisorbed reaction when using a GO additive is a way to radically improve the physical properties of a host. The challenge is three fold: 1) react the functional groups of the GO with a monomer of the future polymer; 2) induce sufficient functionalization on the GO to react with a number of monomers to enable the desired controlled reaction resulting in enhanced physical properties of the final polymer; and 3) create a uniform dispersion of the functionalized graphene (fGO) or oxidized graphene (GO) into the monomer mixture prior to polymerization. The methods of the present invention overcome each of these three challenges.

The inventors have shown that under the right conditions solid-solid mixing or mechanochemistry processing enables a monomer to react with functional groups of the GO, this requires; 1) The oxidation level of the GO flake between 1% and 25% to obtain a covalent reaction with the monomer that then translates a controllable polymerization reaction. An oxidation level less than 1% will not have sufficient level of functional groups to react effectively with the monomer. An oxidation of functionalization level greater than 25% reacts completely with the monomer preventing a further reaction to form a polymer; 2) the flake area to thickness ratio less than 100,000 Å; 3) ball milling with a media with a density less than 9 g/cm³. The ball milling process keeps the GO from self-assembling or flocculating due to van der Waals forces/attraction. The monomer can be a liquid, solid or suspension.

As used herein, the term "carbon additive" refers to a carbon-based monomer or polymer that includes, e.g., an oxide of graphite, graphene, carbon, carbon nanotubes, carbon black or carbon nanowires. These will typically be in powder or particle form, but may also be in suspension in a liquid.

Non-limiting examples of monomers for use with the present invention includes that that form one or more of the following polymers, e.g., vinylacetic acid (VAA), poly(vinylpyrrolidone), polyethylene oxide (PEO), Hydroxy propyl methyl cellulose (HPMC), Poly(phenylene oxide) (PPO), dextran, polysaccharides, polyacrylic acid, polymethacrylic acid, polyacrylamide, PEO/PPO, albumin, chitosan, peptides, papain, collagens, copolymers of lactide and glycolide, copolymers containing polyacrylic acid, copolymers containing polymethacrylic acid, copolymers of any of these homopolymers, copolymers of these homopolymers with the addition of other homopolymers and copolymers and plastics such as polystyrene, polypropylene, and polyterepthalate. In other embodiments, the polymer may be a bioabsorbable, or biodegradable, synthetic polymer such as a polyanhydride, polyorthoester, or polyhydroxy acid such as polylactic acid, polyglycolic acid, and copolymers or blends thereof. Non-degradable materials can also be used. Examples of suitable materials include ethylene vinyl acetate, derivatives of polyvinyl alcohol, teflon, nylon, polymethacrylate and silicon polymers. Other non-degradable materials are ethylene vinyl acetate meshes and polyvinyl alcohol polymers.

The monomer solid needs to be in a powder form where the powder diameter is greater than 0.01 micron and less than 500 microns. For powders that have a diameter less than 1 microns used with GO with an average diameter of 0.5 µm the powder will coat the GO flake and react with the oxide on the GO flake. In the case where larger monomer powder the GO powder will coat the monomer/prepolymer powder. Ideally the monomers powder 0.01 µm and 1 µm centipoise. For liquid monomers or monomers in suspension the viscosity needs to be between 1 centipoise and 10,000 centipoise. Ideally the liquid or suspended monomers are between 1 and 100 centipoise. The parameters are necessary to enable the covalent reaction and prevent damaging the monomer or size reduction of the GO; 4) milling speed less than 700 rpm and a milling time less than 2 hour with a monomer. The minimum time is required to allow for covalent reaction while the maximum time prevents the overheating and decomposition or degradation of the monomer. 5) The process produces a physisorbed monomer GO material. The physisorbed monomer acts as both a compatibilizer and prevents agglomeration/flocculation enabling a simple dispersion in a reactor; and 6) once placed into the reactor and processed with other monomers or pre-polymer (e.g., a polyethylene terephthalate (PET) pre-polymer) and/or a catalyst such as sodium hydroxide the physisorbed monomer becomes a chemisorbed monomer GO material that can be further reacted into the polymer structure. The invention will work with any powder monomer or pre-polymer.

The method of the present invention enables the dispersion and reaction of graphene oxide with a monomer forming covalent bonds between the GO and the polymer. The particles of the one material (monomer) are coated with the material of another component with OH or COOH functionalization using a milling process. The inventors use 20% GO to 80% monomer by weight that are mixed together in a ball milling vessel with a volume of 25 gal with 300 lbs. media. The media used has a density of > 9 g/cm³ with a diameter d (d = 10 mm). Milling or mixing can be accomplished in a closed chamber for 5 to 100 minutes at 100 RPM or less to produce a physisorbed monomer GO material. The physisorbed monomer GO structure when dispersed in a chemical reactor with additional monomers, catalyst and/or additional energy produces a chemisorbed monomer GO material that then polymerizes into a composite material via *in-situ* polymerization. The reactor is typically held at 65°C to melt and blend the two monomers, however, the reactor can operate at 35, 40, 45, 45, 55, 60, 65, 70 or 75°C, depending on the melting temperature of the monomer or monomers. The blending is typically done at 25 rpm. To facilitate the formation of a polymer the process may use a catalyst, e.g., volatile, fixed or permanent base chosen from one or more of ammonia, amines, potassium hydroxide, lithium hydroxide, sodium hydroxide, calcium hydroxide, sodium carbonate, sodium silicate, and transition metal amino compounds. The resulting composite material shows significant enhancement in (>100%) physical properties that occurs with an increase in the elongation to break. By controlling the ratio of the components, one can achieve low density, high electrical conductivity, and surface hardness.

The present invention includes method of making a chemisorbed graphene oxide polymer composite comprising, consisting essentially of, or consisting of, the steps of: placing a monomer and graphene oxide into a ball mill; milling the monomer with a carbon additive to produce a physisorbed monomer graphene oxide material; placing the physisorbed monomer graphene oxide material into a polymerization chemical reactor, wherein the physisorbed monomer graphene oxide is converted to chemisorbed monomer graphene oxide; and reacting the monomer carbon additive with other monomers or prepolymers to polymerize the materials to form a chemisorbed carbon polymer composite.

In one embodiment, the present invention includes a method of making a chemisorbed graphene oxide polymer composite comprising, consisting essentially of, or consisting of, the steps of: placing a monomer and graphene oxide into a ball mill; milling the monomer with a carbon additive to produce a physisorbed monomer graphene oxide material; placing the physisorbed monomer graphene oxide material into a polymerization chemical reactor, wherein the physisorbed monomer graphene oxide is converted to chemisorbed monomer graphene oxide by a heat treatment; and reacting the monomer carbon additive with other monomers or prepolymers to polymerize the materials to form a chemisorbed carbon polymer composite. In one aspect, the chemisorbed carbon polymer composite has both an increase in physical properties and has a corresponding increase in elongation to break. In another aspect, the carbon additive is comprised of an oxide of graphite, graphene, carbon, carbon nanotubes, carbon black or carbon nanowires. In another aspect, the monomer of is a liquid or a solid particle. In another aspect, the monomer is a particle with a particle size greater than 1µm and less than 500 µm. In another aspect, the monomer is a liquid of a viscosity greater than 1 centipoise and less than 10,000 centipoise. In another aspect, the carbon oxide is comprised of at least one of: a hydroxide, a peroxide, an epoxide or a carboxylic. In another aspect, the carbon oxide is graphene oxide. In another aspect, the graphene oxide has an oxidation level between 1% and 25%. In another aspect, the graphene oxide is a graphene oxide flake. In another aspect, the graphene oxide flake has an area to thickness ration less than 100,000 Å. In another aspect, the heat treatment further comprises a catalyst. In another aspect, the catalyst selected from a volatile, fixed or permanent base chosen from one or more of ammonia, amines, potassium hydroxide, lithium hydroxide, sodium hydroxide, calcium hydroxide, sodium carbonate, sodium silicate, and transition metal amino compounds. In another aspect, the heat treatment comprises a temperature of 35, 40, 45, 45, 55, 60, 65, 70 or 75°C.

In another embodiment, the present invention includes a method of making a chemisorbed graphene oxide polymer composite comprising, consisting essentially of, or consisting of, the steps of: placing a monomer and graphene oxide flake into a ball mill; milling the monomer with a carbon additive to produce a physisorbed monomer graphene oxide material; placing the physisorbed monomer graphene oxide material into a polymerization chemical reactor, wherein the physisorbed monomer graphene oxide is converted to chemisorbed monomer graphene oxide by a heat treatment; and reacting the monomer carbon additive with other monomers or prepolymers to polymerize the materials to form a chemisorbed carbon polymer composite. In one aspect, the chemisorbed carbon polymer composite has both an increase in physical properties and has a corresponding increase in elongation to break. In another aspect, the carbon additive is comprised of an oxide of graphite, graphene, carbon, carbon nanotubes, carbon black or carbon nanowires. In another aspect, the monomer of is a liquid or a solid particle. In another aspect, the monomer is a particle with a particle size greater than 1µm and less than 500 µm. In another aspect, the monomer is a liquid of a viscosity greater than 1 centipoise and less than 10,000 centipoise. In another aspect, the carbon oxide is comprised of at least one of: a hydroxide, a peroxide, an epoxide or a carboxylic. In another aspect, the graphene oxide flake has an oxidation level between 1% and 25%. In another aspect, the graphene oxide flake has an area to thickness ration less than 100,000 Å. In another aspect, the reactor further comprises a catalyst. In another aspect, the catalyst selected from a volatile, fixed or permanent base chosen from one or more of ammonia, amines, potassium hydroxide, lithium hydroxide, sodium hydroxide, calcium hydroxide, sodium carbonate, sodium silicate, and transition metal amino compounds. In another aspect, the heat treatment comprises a temperature of 35, 40, 45, 45, 55, 60, 65, 70 or 75°C.

In one embodiment, the present invention also includes a chemisorbed graphene oxide polymer composite made by a method comprising, consisting essentially of, or consisting of: placing a monomer and graphene oxide into a ball mill; milling the monomer with a carbon additive to produce a physisorbed monomer graphene oxide material; placing the physisorbed monomer graphene oxide material into a polymerization chemical reactor, wherein the physisorbed monomer graphene oxide is converted to chemisorbed monomer graphene oxide by a heat treatment and, optionally, a catalyst; and reacting the monomer carbon additive with other monomers or prepolymers to polymerize the materials to form the chemisorbed graphene oxide polymer composite.

In one embodiment, the present invention also includes a method of making a chemisorbed graphene oxide comprising, consisting essentially of, or consisting of, the steps of: placing a monomer and graphene oxide into a ball mill; milling the monomer with a carbon additive to produce a physisorbed monomer graphene oxide material; converting the physisorbed monomer graphene oxide material into a chemisorbed monomer graphene oxide by a heat treatment. In one aspect, the carbon additive comprised an oxide of graphite, graphene, carbon, carbon nanotubes, carbon black or carbon nanowires. In another aspect, the monomer of is a liquid or a solid particle. In another aspect, the monomer is a particle with a particle size greater than 1µm and less than 500 µm. In another aspect, the monomer is a liquid of a viscosity greater than 1 centipoise and less than 10,000 centipoise. In another aspect, the graphene oxide has an oxidation level between 1% and 25%. In another aspect, the graphene oxide is a graphene oxide flake. In another aspect, the graphene oxide flake has an area to thickness ration less than 100,000 Å. In another aspect, the heat treatment further comprises a catalyst. In another aspect, the catalyst selected from a volatile, fixed or permanent base chosen from one or more of ammonia, amines, potassium hydroxide, lithium hydroxide, sodium hydroxide, calcium hydroxide, sodium carbonate, sodium silicate, and transition metal amino compounds. In another aspect, the heat treatment comprises a temperature of 35, 40, 45, 45, 55, 60, 65, 70 or 75°C.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

It is contemplated that any embodiment discussed in this specification can be implemented with respect to any method, kit, reagent, or composition of the invention, and vice versa. Furthermore, compositions of the invention can be used to achieve methods of the invention.

It will be understood that particular embodiments described herein are shown by way of illustration and not as limitations of the invention. The principal features of this invention can be employed in various embodiments without departing from the scope of the invention. Those skilled in the art will recognize, or be able to ascertain using no more than routine experimentation, numerous equivalents to the specific procedures described herein. Such equivalents are considered to be within the scope of this invention and are covered by the claims.

All publications and patent applications mentioned in the specification are indicative of the level of skill of those skilled in the art to which this invention pertains.

The use of the word "a" or "an" when used in conjunction with the term "comprising" in the claims and/or the specification may mean "one," but it is also consistent with the meaning of "one or more," "at least one," and "one or more than one." The use of the term "or" in the claims is used to mean "and/or" unless explicitly indicated to refer to alternatives only or the alternatives are mutually exclusive, although the disclosure supports a definition that refers to only alternatives and "and/or." Throughout this application, the term "about" is used to indicate that a value includes the inherent variation of error for the device, the method being employed to determine the value, or the variation that exists among the study subjects.

As used in this specification and claim(s), the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps. In embodiments of any of the compositions and methods provided herein, "comprising" may be replaced with "consisting essentially of' or "consisting of". As used herein, the phrase "consisting essentially of' requires the specified integer(s) or steps as well as those that do not materially affect the character or function of the claimed invention. As used herein, the term "consisting" is used to indicate the presence of the recited integer (e.g., a feature, an element, a characteristic, a property, a method/process step or a limitation) or group of integers (e.g., feature(s), element(s), characteristic(s), property(ies), method/process steps or limitation(s)) only.

The term "or combinations thereof' as used herein refers to all permutations and combinations of the listed items preceding the term. For example, "A, B, C, or combinations thereof' is intended to include at least one of: A, B, C, AB, AC, BC, or ABC, and if order is important in a particular context, also BA, CA, CB, CBA, BCA, ACB, BAC, or CAB. Continuing with this example, expressly included are combinations that contain repeats of one or more item or term, such as BB, AAA, AB, BBC, AAABCCCC, CBBAAA, CABABB, and so forth. The skilled artisan will understand that typically there is no limit on the number of items or terms in any combination, unless otherwise apparent from the context.

As used herein, words of approximation such as, without limitation, "about", "substantial" or "substantially" refers to a condition that when so modified is understood to not necessarily be absolute or perfect but would be considered close enough to those of ordinary skill in the art to warrant designating the condition as being present. The extent to which the description may vary will depend on how great a change can be instituted and still have one of ordinary skill in the art recognize the modified feature as still having the required characteristics and capabilities of the unmodified feature. In general, but subject to the preceding discussion, a numerical value herein that is modified by a word of approximation such as "about" may vary from the stated value by at least ±1, 2, 3, 4, 5, 6, 7, 10, 12 or 15%.

All of the compositions and/or methods disclosed and claimed herein can be made and executed without undue experimentation in light of the present disclosure. While the compositions and methods of this invention have been described in terms of preferred embodiments, it will be apparent to those of skill in the art that variations may be applied to the compositions and/or methods and in the steps or in the sequence of steps of the method described herein without departing from the concept, spirit and scope of the invention. All such similar substitutes and modifications apparent to those skilled in the art are deemed to be within the spirit, scope and concept of the invention as defined by the appended claims.

To aid the Patent Office, and any readers of any patent issued on this application in interpreting the claims appended hereto, applicants wish to note that they do not intend any of the appended claims to invoke paragraph 6 of 35 U.S.C. § 112, U.S.C. § 112 paragraph (f), or equivalent, as it exists on the date of filing hereof unless the words "means for" or "step for" are explicitly used in the particular claim.

For each of the claims, each dependent claim can depend both from the independent claim and from each of the prior dependent claims for each and every claim so long as the prior claim provides a proper antecedent basis for a claim term or element.

The present invention comprises the following embodiments:
1. A method of making a chemisorbed graphene oxide polymer composite comprising the steps of:
   placing a monomer and graphene oxide into a ball mill;
   milling the monomer with a carbon additive to produce a physisorbed monomer graphene oxide material;
   placing the physisorbed monomer graphene oxide material into a polymerization chemical reactor, wherein the physisorbed monomer graphene oxide is converted to chemisorbed monomer graphene oxide by a heat treatment; and
   reacting the monomer carbon additive with other monomers or prepolymers to polymerize the materials to form a chemisorbed carbon polymer composite.
2. The method of embodiment 1, wherein the chemisorbed carbon polymer composite has both an increase in physical properties and has a corresponding increase in elongation to break.
3. The method of embodiment 1, wherein the carbon additive is comprised of an oxide of graphite, graphene, carbon, carbon nanotubes, carbon black or carbon nanowires.
4. The method of embodiment 1, wherein the monomer is a liquid or a solid particle.
5. The method of embodiment 1, wherein the monomer is a particle with a particle size greater than 1µm and less than 500 µm.
6. The method of embodiment 1, wherein the monomer is a liquid of a viscosity greater than 1 centipoise and less than 10,000 centipoise.
7. The method of embodiment 3, wherein the carbon oxide is comprised of at least one of: a hydroxide, a peroxide, an epoxide or a carboxylic.
8. The method of embodiment 3, wherein the carbon oxide is graphene oxide.
9. The method of embodiment 1, wherein the graphene oxide has an oxidation level between 1% and 25%.
10. The method of embodiment 1, wherein the graphene oxide is a graphene oxide flake.
11. The method of embodiment 10, wherein the graphene oxide flake has an area to thickness ration less than 100,000 Å.
12. The method of embodiment 1, wherein the heat treatment further comprises a catalyst.
13. The method of embodiment 12, wherein the catalyst is selected from a volatile, fixed or permanent base chosen from one or more of ammonia, amines, potassium hydroxide, lithium hydroxide, sodium hydroxide, calcium hydroxide, sodium carbonate, sodium silicate, and transition metal amino compounds.
14. The method of embodiment 1, wherein the heat treatment comprises a temperature of 35, 40, 45, 45, 55, 60, 65, 70 or 75°C.
15. A method of making a chemisorbed graphene oxide polymer composite comprising the steps of:
   placing a monomer and graphene oxide flake into a ball mill;
   milling the monomer with a carbon additive to produce a physisorbed monomer graphene oxide material;
   placing the physisorbed monomer graphene oxide material into a polymerization chemical reactor, wherein the physisorbed monomer graphene oxide is converted to chemisorbed monomer graphene oxide by a heat treatment; and
   reacting the monomer carbon additive with other monomers or prepolymers to polymerize the materials to form a chemisorbed carbon polymer composite.
16. The method of embodiment 15, wherein the chemisorbed carbon polymer composite has both an increase in physical properties and has a corresponding increase in elongation to break.
17. The method of embodiment 15, wherein the carbon additive is comprised of an oxide of graphite, graphene, carbon, carbon nanotubes, carbon black or carbon nanowires.
18. The method of embodiment 15, wherein the monomer is a liquid or a solid particle.
19. The method of embodiment 15, wherein the monomer is a particle with a particle size greater than 1µm and less than 500 µm.
20. The method of embodiment 15, wherein the monomer is a liquid of a viscosity greater than 1 centipoise and less than 10,000 centipoise.
21. The method of embodiment 15, wherein the carbon oxide is comprised of at least one of: a hydroxide, a peroxide, an epoxide or a carboxylic.
22. The method of embodiment 15, wherein the graphene oxide flake has an oxidation level between 1% and 25%.
23. The method of embodiment 15, wherein the graphene oxide flake has an area to thickness ratio of less than 100,000 Å.
24. The method of embodiment 15, wherein the reactor further comprises a catalyst.
25. The method of embodiment 24, wherein the catalyst is selected from a volatile, fixed or permanent base chosen from one or more of ammonia, amines, potassium hydroxide, lithium hydroxide, sodium hydroxide, calcium hydroxide, sodium carbonate, sodium silicate, and transition metal amino compounds.
26. The method of embodiment 15, wherein the heat treatment comprises a temperature of 35, 40, 45, 45, 55, 60, 65, 70 or 75°C.
27. A chemisorbed graphene oxide polymer composite made by a method comprising:
   placing a monomer and graphene oxide into a ball mill;
   milling the monomer with a carbon additive to produce a physisorbed monomer graphene oxide material;
   placing the physisorbed monomer graphene oxide material into a polymerization chemical reactor, wherein the physisorbed monomer graphene oxide is converted to chemisorbed monomer graphene oxide by a heat treatment and, optionally, a catalyst; and
   reacting the monomer carbon additive with other monomers or prepolymers to polymerize the materials to form the chemisorbed graphene oxide polymer composite.
28. A method of making a chemisorbed graphene oxide comprising the steps of:
   placing a monomer and graphene oxide into a ball mill;
   milling the monomer with a carbon additive to produce a physisorbed monomer graphene oxide material;
   converting the physisorbed monomer graphene oxide material into a chemisorbed monomer graphene oxide by a heat treatment.
29. The method of embodiment 1, wherein the carbon additive is comprised of an oxide of graphite, graphene, carbon, carbon nanotubes, carbon black or carbon nanowires.
30. The method of embodiment 1, wherein the monomer is a liquid or a solid particle.
31. The method of embodiment 1, wherein the monomer is a particle with a particle size greater than 1µm and less than 500 µm.
32. The method of embodiment 1, wherein the monomer is a liquid of a viscosity greater than 1 centipoise and less than 10,000 centipoise.
33. The method of embodiment 1, wherein the graphene oxide has an oxidation level between 1% and 25%.
34. The method of embodiment 1, wherein the graphene oxide is a graphene oxide flake.
35. The method of embodiment 6, wherein the graphene oxide flake has an area to thickness ratio of less than 100,000 Å.
36. The method of embodiment 1, wherein the heat treatment further comprises a catalyst.
37. The method of embodiment 8, wherein the catalyst is selected from a volatile, fixed or permanent base chosen from one or more of ammonia, amines, potassium hydroxide, lithium hydroxide, sodium hydroxide, calcium hydroxide, sodium carbonate, sodium silicate, and transition metal amino compounds.
38. The method of embodiment 1, wherein the heat treatment comprises a temperature of 35, 40, 45, 45, 55, 60, 65, 70 or 75 °C.

### REFERENCES

ACS Macro Lett. 2014, DOI: 10.1021/mz500098r: (Polyurea Development Association Conference October 4 - 6, 2017 - John Becker Presentation).

## Claims

1. A method of making a chemisorbed monomer graphene oxide comprising the steps of:
placing a monomer and graphene oxide into a ball mill;
milling the monomer with the graphene oxide to produce a physisorbed monomer graphene oxide material;
converting the physisorbed monomer graphene oxide material into the chemisorbed monomer graphene oxide by a heat treatment.

2. The method of claim 1, wherein the monomer is a liquid or a solid particle.

3. The method of claim 1, wherein the monomer is a particle with a particle size greater than 1 µm and less than 500 µm.

4. The method of claim 1, wherein the monomer is a liquid of a viscosity greater than 1 centipoise and less than 10,000 centipoise.

5. The method of claim 1, wherein the graphene oxide has an oxidation level between 1% and 25%.

6. The method of claim 1, wherein the graphene oxide is a graphene oxide flake.

7. The method of claim 6, wherein the graphene oxide flake has an area to thickness ratio of less than 100,000 Å.

8. The method of claim 1, wherein the heat treatment further comprises a catalyst.

9. The method of claim 8, wherein the catalyst is selected from a volatile, fixed or permanent base chosen from one or more of ammonia, amines, potassium hydroxide, lithium hydroxide, sodium hydroxide, calcium hydroxide, sodium carbonate, sodium silicate, and transition metal amino compounds.

10. The method of claim 1, wherein the heat treatment comprises a temperature of 35, 40, 45, 45, 55, 60, 65, 70 or 75 °C.
